# EUROPEAN PATENT SPECIFICATION

(11) **EP 4 120 384 B1**
(45) Date of publication and mention of the grant of the patent: **02.07.2025**
(21) Application number: 21813591.1
(22) Date of filing: 24.05.2021
(51) Int. Cl.: H01M 4/04, H01M 50/531, B26F 1/12, B23K 26/38, B23K 26/03, B23K 26/08, B23K 101/36, B26D 1/06, B26D 5/34, H01M 10/04, H01M 10/42, B26D 1/00

(54) **METHOD FOR MANUFACTURING SECONDARY BATTERY AND APPARATUS FOR MANUFACTURING SECONDARY BATTERY**
VERFAHREN ZUR HERSTELLUNG EINER SEKUNDÄRBATTERIE UND VORRICHTUNG ZUR HERSTELLUNG EINER SEKUNDÄRBATTERIE
PROCÉDÉ DE FABRICATION DE BATTERIE SECONDAIRE ET DISPOSITIF DE FABRICATION DE BATTERIE SECONDAIRE

(30) Priority: 29.05.2020 KR 20200065215
(43) Date of publication of application: 18.01.2023
(73) Proprietor: LG Energy Solution, Ltd., Seoul 07335 (KR)
(72) Inventor: PARK, Jung Hyun, Daejeon 34122 (KR); PARK, Dong Hyeuk, Daejeon 34122 (KR); KO, Myoung Jin, Daejeon 34122 (KR); LEE, Hyo Jin, Daejeon 34122 (KR); JO, Sung Jun, Daejeon 34122 (KR); KIM, Gil Woo, Daejeon 34122 (KR); LEE, Hyuk Soo, Daejeon 34122 (KR); LEE, Byung Hee, Daejeon 34122 (KR)
(74) Representative: Plasseraud IP
(86) International application number: PCT/KR2021/006416
(87) International publication number: WO 2021/241960

(56) References cited:
- JP-A- 2002 042 793
- JP-A- 2011 134 479
- KR-A- 20060 034 126
- KR-A- 20060 034 126
- KR-A- 20140 009 015
- KR-A- 20140 009 015
- KR-B1- 101 958 881
- KR-B1- 101 958 881

## Description

### CROSS-REFERENCE TO RELATED APPLICATION

The present application claims the benefit of the priority of Korean Patent Application No. 10-2020-0065215, filed on May 29, 2020.

### TECHNICAL FIELD

The present invention relates to a method for manufacturing a secondary battery and an apparatus for manufacturing a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

According to the related art, a notching process of the electrode is performed through a mold press. Here, in the case of the mold press, a shape is not changed in the notching unless the mold is exchanged, and when the electrode is determined as being defective before the notching process, an operation of the device may be stopped to display the defect by a person. Thereafter, even after the notching process, a production rate is reduced to be displayed and processed so as to display the defect. Thus, there is a problem in that manufacturing productivity is lowered.

[Prior Art Document] (Patent Document) Korean Patent Publication No. 10-2014-0015647.

Document KR 2006/0034126 discloses a testing device for detecting a generated defect of known type.

Document KR 2014/0009015 discloses a system for producing an electrode for use in a rechargeable battery according to the prior art.

Document KR 101 958881 discloses a known secondary battery electrode notching system.

### DISCLOSURE OF THE INVENTION

### TECHNICAL PROBLEM

One aspect of the present invention is to provide a method for manufacturing a secondary battery, which is capable of improving manufacturing productivity by enabling a continuous operation without moving equipment during manufacturing the secondary battery, and an apparatus for manufacturing a secondary battery.

### TECHNICAL SOLUTION

A method for manufacturing a secondary battery according to an embodiment of the present invention is disclosed in the attached claims.

In addition, an apparatus for manufacturing a secondary battery is also provided.

### ADVANTAGEOUS EFFECTS

According to the present invention, the normal electrode portion and the abnormal electrode portion of the electrode is be notched into different shapes through the laser to perform the continuous operation without moving the equipment, thereby improving the manufacturing productivity. Thereafter, when the plurality of cells comprising the notched electrode are manufactured, the defective cell comprising the abnormal electrode portion that is notched as the abnormal electrode portion may be detected and discharged to perform the continuous operation without moving the equipment, thereby significantly improving the manufacturing productivity.

### BRIEF DESCRIPTION OF THE DRAWINGS

FIG. 1 is a front view illustrating an example of an apparatus for manufacturing a secondary battery according to an embodiment of the present invention.
FIG. 2 is a perspective view illustrating a first inspection process and a notching process in a method for manufacturing a secondary battery according to an embodiment of the present invention.
FIG. 3 is a front view illustrating an example of an apparatus for manufacturing a secondary battery according to another embodiment of the present invention.
FIG. 4 is a perspective view illustrating a first inspection process and a notching process in a method for manufacturing a secondary battery according to another embodiment of the present invention.
FIG. 5 is a perspective view illustrating a second inspection process, a cell cutting process, and a discharge process in the method for manufacturing the secondary battery according to another embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Method for manufacturing secondary battery according to an embodiment

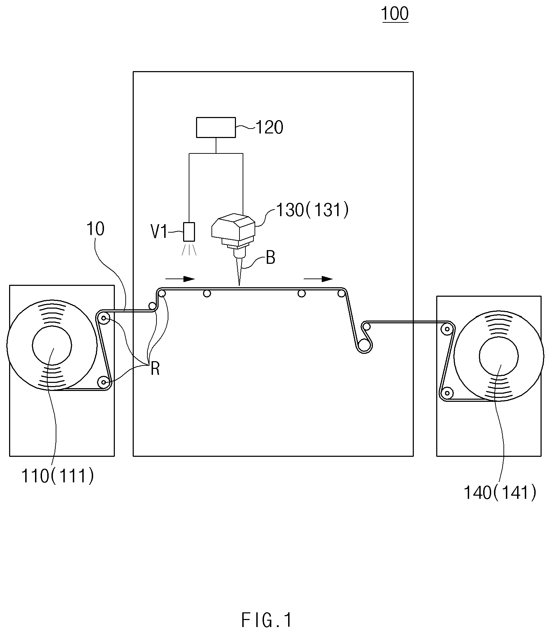

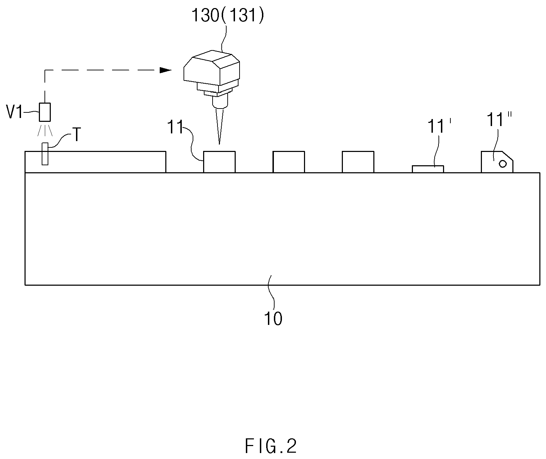

FIG. 1 is a front view illustrating an example of an apparatus for manufacturing a secondary battery according to an embodiment of the present invention, and FIG. 2 is a perspective view illustrating a first inspection process and a notching process in a method for manufacturing a secondary battery according to an embodiment of the present invention.

Referring to FIGS. 1 and 2, a method for manufacturing a secondary battery according to an embodiment of the present invention comprises an electrode supply process of supplying an electrode 10, a first inspection process of detecting the electrode 10 to distinguish a normal electrode portion and an abnormal electrode portion from each other in a first inspection part V1, and a notching process of notching the electrode at a notching part 130.

In addition, the method for manufacturing the secondary battery according to an embodiment of the present invention may further comprise a winding process of winding the notched electrode 10 around an electrode winding part 140.

In more detail, referring to FIG. 1, in the electrode supply process, the electrode 10 may be supplied through the electrode supply part 110. Here, the electrode supply part 110 comprises an electrode supply roll 111 on which the electrode 10 is wound. In the electrode supply process, the electrode 10 wound around the electrode supply roll 111 may be unwound to supply the electrode 10 to a position for the subsequent process. Here, the electrode 10 may be wound around the electrode supply roll 111 in various forms such as a sheet or film shape.

In the electrode supply process, a supply speed of the electrode 10 may be adjusted according to a speed of the notching performed in the notching process.

In the electrode supply process, the electrode supply part 110 may comprise a rollers R for supplying the electrode. Here, a rotation speed of each of the rollers R may be adjusted to adjust a supply rate.

In the first inspection process, the first inspection part V1 detects the supplied electrode 10 to distinguish a normal electrode portion and an abnormal electrode portion from each other.

In addition, in the first inspection process, the first inspection part V1 divides the normal electrode portion from the abnormal electrode portion through a vision sensor and transmits a notching signal to the notching part 130 through a main control system 120. Here, the main control system 120 may transmit a notch-type signal together when the notching signal is transmitted to the notching part 130. In this case, the method for manufacturing the secondary battery according to an embodiment of the present invention may further comprise a control process of controlling the notching part 130 in the main control system 120 to adjust a notched shape of the electrode 10.

In addition, in the first inspection process, for example, the first inspection part V1 senses a defective electrode display tag (NG Tag) T attached to a defective portion of the electrode 10 to detect the normal electrode portion and the abnormal electrode portion. In the first inspection process, for another example, the second inspection part V2 may sense a shape of the electrode 10 to detect the normal electrode portion and the abnormal electrode portion. Here, the normal electrode portion and the abnormal electrode portion may be detected by sensing a width dimension, distortion, an applied state of an active material, etc., in the electrode 10.

In the notching process, the electrode 10 that is subjected to the first inspection process is notched in the notching part 130.

In addition, in the notching process, the notching is performed by irradiating laser light B to the electrode 10 through a laser 131 so that the normal electrode portion and the abnormal electrode portion, which are detected in the first inspection process, are divided from each other.

Furthermore, in the notching process, the notching part 130 notches the normal electrode portion and the abnormal electrode portion, which are distinguished from each other in the first inspection part V1, in different shapes based on the received notching signal.

In the notching process, the normal electrode portion is notched to form an electrode tab 11, and the abnormal electrode portion is notched in at least one shape among a marked shape, a shape having a hole, among a shape of a cut electrode tab 11'. Here, in the notching process, the notching part 130 irradiates the laser light B to a side end of the abnormal electrode portion in the electrode 10 through the laser 131 to notch the abnormal electrode portion so that the shape of the electrode tab 11 at the abnormal electrode portion is different from that of the electrode tab 11 at the normal electrode portion. Here, in more detail, the notched shape of the abnormal electrode portion may have a shape, in which an electrode tab 11' having a rectangular shape, in which a portion at which the electrode tab 11' is to be formed is short, is cut, a shape, in which an edge of a portion at which an electrode tab 11" is to be formed is chamfered, a marked shape in which a pattern is formed, or a shape in which a circular or polygonal hole is formed.

In the winding process, the notched electrode 10 may be wound around the electrode winding part 140. Here, the electrode winding part 140 may comprise an electrode winding roll 141, on which the electrode 10 is wound, to wind the electrode 10 moved in the winding process around the electrode winding roll 141.

Referring to FIGS. 1 and 2, in the method for manufacturing the secondary battery, which has the above-described configuration, according to an embodiment of the present invention, the normal electrode portion and the abnormal electrode portion in the supplied electrode 10 are distinguished from each other through the first inspection part V1 and then are notched in different shapes through the laser 131 to perform a continuous process without moving equipment, thereby improving manufacturing productivity.

### Method for manufacturing secondary battery according to another embodiment

Hereinafter, a method for manufacturing a secondary battery according to another embodiment of the present invention will be described.

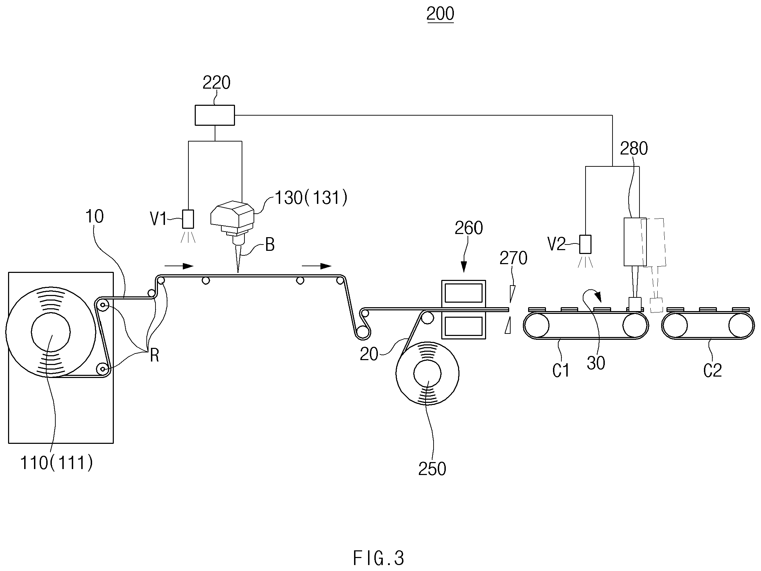

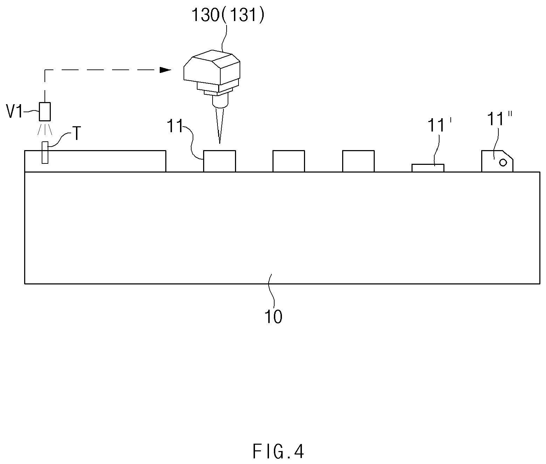

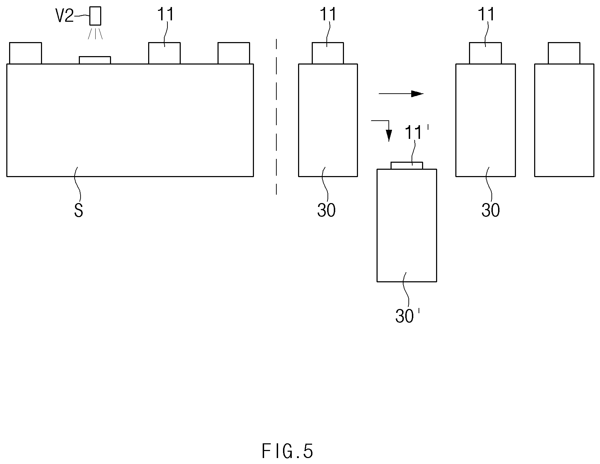

FIG. 3 is a front view illustrating an example of an apparatus for manufacturing a secondary battery according to another embodiment of the present invention, FIG. 4 is a perspective view illustrating a first inspection process and a notching process in a method for manufacturing a secondary battery according to another embodiment of the present invention, and FIG. 5 is a perspective view illustrating a second inspection process, a cell cutting process, and a discharge process in the method for manufacturing the secondary battery according to another embodiment of the present invention.

Referring to FIGS. 3 and 5, a method for manufacturing a secondary battery according to another embodiment of the present invention comprises an electrode supply process of supplying an electrode 10, a first inspection process of detecting the electrode 10 to distinguish a normal electrode portion and an abnormal electrode portion from each other in a first inspection part V1, and a notching process of notching the electrode 10 at a notching part 130. In addition, in the method for manufacturing the secondary battery according to another embodiment of the present invention may further comprise, after the notching process, a lamination process of laminating an electrode 10 and a separator 20, a second inspection process of an electrode portion notched as the abnormal electrode portion through a second inspection part V2, a cell cutting process of cutting the electrode portion into a plurality of cells 30, and a discharge process of discharging a defective cell 30' comprising the abnormal electrode portion.

The method for manufacturing the secondary battery according to another embodiment of the present invention is different from the method for manufacturing the secondary battery according to the foregoing embodiment of the present invention in that the method for manufacturing the secondary battery according to another embodiment of the present invention further comprises the lamination process, the second inspection process, the cell cutting process, and the discharge process. Thus, in descriptions of the method for manufacturing the secondary battery according to another embodiment of the present invention, contents duplicated with the method for manufacturing the secondary battery according to the forgoing embodiment of the present invention will be omitted or briefly described, and also, differences therebetween will be mainly described.

In more detail, referring to FIGS. 3 to 5, in the electrode supply process, the electrode 10 may be supplied through the electrode supply part 110.

In the electrode supply process, a supply speed of the electrode 10 may be adjusted according to a speed of the notching performed in the notching process.

In the electrode supply process, the electrode supply part 110 may comprise a rollers R supplying the electrode 10. Here, a rotation speed of each of the rollers R may be adjusted to adjust a supply rate.

In the first inspection process, the first inspection part V1 detects the supplied electrode 10 to distinguish a normal electrode portion and an abnormal electrode portion from each other.

In the first inspection process, the first inspection part V1 divides the normal electrode portion from the abnormal electrode portion through a vision sensor and transmits a notching signal to the notching part 130 through a main control system 220.

In the notching process, the electrode 10 that is subjected to the first inspection process is notched in the notching part 130.

In addition, in the notching process, the normal electrode portion and the abnormal electrode portion, which are detected in the first inspection process, are notched through a laser 131 so as to be divided from each other.

Furthermore, in the notching process, the notching part 130 notches the normal electrode portion and the abnormal electrode portion, which are distinguished from each other in the first inspection part V1, in different shapes based on the received notching signal.

In the notching process, the normal electrode portion is notched to form an electrode tab 11, and the abnormal electrode portion is notched in the form of at least one of a marked shape, a shape having a hole, or a shape of a cut electrode tab 11'. Here, in the notching process, the notching part 130 irradiates the laser light B to a side end of the abnormal electrode portion in the electrode 10 through the laser 131 to notch the abnormal electrode portion so that the shape of the electrode tab 11 at the abnormal electrode portion is different from that of the electrode tab 11 at the normal electrode portion. Here, in more detail, the notched shape of the abnormal electrode portion may have a shape, in which an electrode tab 11' having a rectangular shape, in which a portion at which the electrode tab 11' is to be formed is short, is cut, a shape, in which an edge of a portion at which an electrode tab 11" is to be formed is chamfered, a marked shape in which a pattern is formed, or a shape in which a circular or polygonal hole is formed.

In the lamination process, after the notching process, the electrode 10 and the separator 20 may be alternately stacked to be laminated. Here, in the lamination process, heat and a pressure are applied to a stack S of the notched electrode 10 and the separator 20, and thus, the electrode and the separator 20 may be bonded to each other through the lamination part 260.

Here, the separator 20 wound around the separator supply roll 250 may be unwound to supply the separator 20 to the lamination part 260.

In the second inspection process, the second inspection part V2 may detect an electrode portion notched as the abnormal electrode portion after the lamination process. Here, in the second inspection process, a cut electrode tab 11', a mark, or a hole of the electrode portion notched as the abnormal electrode portion may be sensed through the second inspection part V2 comprising a vision sensor to detect the abnormal electrode portion, thereby transmitting a detection signal to a discharge part 280.

In the cell cutting process, after the second inspection process, the stack S of the electrode 10 and the separator 20, which are laminated, may be cut into a plurality of cells 30. Here, in the cell cutting process, the stack S of the electrode 10 and the separator 20, which is disposed between a pair of cutters, may be cut through a cell cutting part 270 comprising the pair of cutters.

In this case, the cut cells 30 may be transferred to a subsequent process through conveyor belts C1 and C2.

In the discharge process, after the cutting process, the discharge part 280 may discharge defective cell 30' comprising the abnormal electrode portion detected through the second inspection process from the plurality of cells 30. Here, in the discharge process, the defective cell 30' comprising the abnormal electrode portion may be gripped through the discharge part 280 comprising a jig to separate the defective cell 30' from the cells comprising the normal electrode portion.

In the method for manufacturing the secondary battery according to another embodiment of the present invention configured as described above, the normal electrode portion and the abnormal electrode portion of the electrode 10 are notched in different shapes through the laser 131, and then, the defective cell 30' comprising the abnormal electrode portion, which is notched as the abnormal electrode portion, may be detected in the subsequent inspection process and then discharged in the discharge process. Therefore, a continuous operate may be possible without moving the equipment to significantly improve manufacturing productivity.

### Apparatus for manufacturing secondary battery according to an embodiment

Hereinafter, an apparatus for manufacturing a secondary battery according to an embodiment of the present invention will be described.

Referring to FIGS. 1 and 2, an apparatus 100 for manufacturing a secondary battery according to an embodiment of the present invention comprises an electrode supply part 110 supplying an electrode 10, a first inspection part V1 detecting the supplied electrode 10 to distinguish a normal electrode portion and an abnormal electrode portion from each other, a notching part 130 notching the electrode 10 passing through the first inspection part V1, and a main control system 120 receiving a notching signal from the first inspection part V1 to transmit the notching signal to the notching part 130. In addition, the apparatus 100 for manufacturing the secondary battery according to an embodiment of the present invention may further comprise an electrode winding part 140 winding the electrode 10.

The apparatus 100 for manufacturing the secondary battery according to an embodiment of the present invention relates to an apparatus for manufacturing the secondary battery applied to the method for manufacturing the secondary battery according to the forgoing embodiment and another embodiment of the present invention.

Therefore, in descriptions of the apparatus 100 for manufacturing the secondary battery according to this embodiment, contents duplicated with those of the apparatus according to the forgoing embodiment and another embodiment of the prevent invention will be omitted or briefly described, and differences will be mainly described.

In more detail, an electrode supply part 110 may supply an electrode 10. Here, the electrode supply part 110 comprises an electrode supply roll 111 on which the electrode 10 is wound, and the electrode 10 wound around the electrode supply roll 111 may be unwound to supply the electrode 10 to a position for the subsequent process.

Also, the electrode supply part 110 may adjust a supply rate of the electrode 10 according to a notching speed performed by a notching part 130. Here, the electrode supply part 110 may comprise a rollers R supplying the electrode 10. Here, a rotation speed of each of the rollers R may be adjusted to adjust the supply rate.

The first inspection part V1 detects the supplied electrode 10 to distinguish a normal electrode portion and an abnormal electrode portion from each other.

In addition, the first inspection part V1 transmits a notching signal by dividing the normal electrode portion and the abnormal electrode portion through a vision sensor.

For example, the first inspection part V1 senses a defective electrode display tag (NG Tag) T attached to a defective portion of the electrode 10 to detect the normal electrode portion and the abnormal electrode portion.

For another example, a second inspection part V2 may sense a shape of the electrode 10 to detect the normal electrode portion and the abnormal electrode portion. Here, the normal electrode portion and the abnormal electrode portion may be detected by sensing a width dimension, distortion, an applied state of an active material, etc., in the electrode 10.

A main control system 120 receives the notching signal from the first inspection part V1 to transmit the notching signal to the notching part 130. Here, the main control system 120 may transmit a notch-type signal together when the notching signal is transmitted to the notching part 130. That is, the notched shape of the electrode 10 may be adjusted by controlling the notching part 130 in the main control system 120.

The notching part 130 notches the electrode 10 passing through the first inspection part V1.

In addition, the notching part 130 notches the electrode 10 through a laser 131 so that the normal electrode portion and the abnormal electrode portion, which are detected in the first inspection part V1, are divided from each other.

Furthermore, the notching part 130 notches the normal electrode portion and the abnormal electrode portion, which are distinguished from each other in the first inspection part V1, in different shapes based on the received notching signal.

In addition, the notching part 130 may notch the normal electrode portion to form an electrode tab 11. Here, the notching part 130 may irradiate a laser beam B to a side end of the normal electrode portion through the laser 131 to form the rectangular electrode tab 11.

In addition, the notching part 130 may notch the abnormal electrode portion in the form of at least one of a marked shape, a shape having a hole, or a shape of a cut electrode tab 11'. Here, the notching part 130 may irradiate the laser light B to a side end of the abnormal electrode portion in the electrode 10 through the laser 131 to notch the abnormal electrode portion so that the shape of the electrode tab 11 at the abnormal electrode portion is different from that of the electrode tab 11 at the normal electrode portion. Here, in more detail, the notched shape of the abnormal electrode portion may have a shape, in which an electrode tab 11' having a rectangular shape, in which a portion at which the electrode tab 11' is to be formed is short, is cut, a shape, in which an edge of a portion at which an electrode tab 11" is to be formed is chamfered, a marked shape in which a pattern is formed, or a shape in which a circular or polygonal hole is formed.

An electrode winding part 140 may wind the notched electrode 10 passing through the notching part 130. Here, the electrode winding part 140 may comprise an electrode winding roll 141, on which the electrode 10 is wound, to wind the moving electrode 10 around the electrode winding roll 141.

### Apparatus for manufacturing secondary battery according to another embodiment

Hereinafter, an apparatus for manufacturing a secondary battery according to another embodiment of the present invention will be described.

Referring to FIGS. 3 to 5, an apparatus 200 for manufacturing a secondary battery according to another embodiment of the present invention comprises an electrode supply part 110 supplying an electrode 10, a first inspection part V1 detecting the supplied electrode 10 to distinguish a normal electrode portion and an abnormal electrode portion from each other, a notching part 130 notching the electrode 10 passing through the first inspection part V1, a main control system 220 receiving a notching signal from the first inspection part V1 to transmit the notching signal to the notching part 130, a lamination part 260 laminating the notched electrode 10 and a separator 20, a second inspection part V2 detecting an electrode portion that is notched as the abnormal electrode portion, a cell cutting part 270 cutting a stack S of the electrode 10 and the separator into a plurality of cells 30, and a discharge part 280 discharging a defective cell 30' comprising the abnormal electrode portion.

The apparatus 200 for manufacturing the secondary battery according to another embodiment of the present invention is different from the apparatus for manufacturing the electrode assembly according to the foregoing embodiment of the present invention in that the apparatus 200 further comprises the lamination part 260, the second inspection part V2, the cell cutting part 270, and the discharge part 280.

Therefore, in descriptions of the apparatus 200 for manufacturing the secondary battery according to this embodiment, contents duplicated with those of the apparatus according to the forgoing embodiment of the prevent invention will be omitted or briefly described, and differences will be mainly described.

In more detail, in more detail, the electrode supply part 110 may supply an electrode 10. Here, the electrode supply part 110 comprises an electrode supply roll 111 on which the electrode 10 is wound, and the electrode 10 wound around the electrode supply roll 111 may be unwound to supply the electrode 10 to a position for the subsequent process.

Also, the electrode supply part 110 may adjust a supply rate of the electrode 10 according to a notching speed performed by a notching part 130. Here, the electrode supply part 110 may comprise a rollers R supplying the electrode 10. Here, a rotation speed of each of the rollers R may be adjusted to adjust the supply rate.

The first inspection part V1 detects the supplied electrode 10 to distinguish a normal electrode portion and an abnormal electrode portion from each other.

The first inspection part V1 transmits a notching signal by dividing the normal electrode portion and the abnormal electrode portion through a vision sensor.

The main control system 220 receives the notching signal to transmit the notching signal to the notching part 130. Here, the main control system 220 may transmit a notch-type signal together when the notching signal is transmitted to the notching part 130.

The notching part 130 notches the electrode 10 passing through the first inspection part V1.

In addition, the notching part 130 notches the electrode through a laser 131 so that the normal electrode portion and the abnormal electrode portion, which are detected in the first inspection part V1, are divided from each other.

The notching part 130 notches the normal electrode portion and the abnormal electrode portion, which are distinguished from each other in the first inspection part V1, in different shapes based on the received notching signal.

The notching part 130 may notch the normal electrode portion to form an electrode tab 11 and notch the abnormal electrode portion in the form of at least one of a marked shape, a shape having a hole, or a shape of a cut electrode tab 11'.

The lamination part 260 may alternately stack the notched electrode 10 and the separator 20 to laminate the electrode 10 and the separator 20. Here, the lamination part 260 may press the stack S of the notched electrode 10 and the separator 20 while applying heat to bond the electrode 10 and the separator 20 to each other.

Here, the separator 20 wound around the separator supply roll 250 may be unwound to supply the separator 20 to the lamination part 260.

The second inspection part V2 may detect an electrode portion notched as the abnormal electrode portion after passing through the lamination part 260. Here, the second inspection part V2 may detect a cut electrode tab 11', a mark, or a hole of the electrode portion notched as the abnormal electrode portion through the vision sensor to detect the abnormal electrode portion, thereby transmitting a detection signal to a discharge part 280.

The cell cutting part 270 may cut the stack S of the electrode 10 and the separator 20, which are laminated after passing through the second inspection part V2, into a plurality of cells 30. Here, the cell cutting part 270 may comprise a pair of cutters and may cut the stack S of the electrode 10 and the separator 20, which is disposed between the pair of cutters, while moving the pair of cutters vertically.

Then, the cut cells 30 may be transferred to a subsequent process through conveyor belts C1 and C2.

The discharge part 280 may discharge defective cells 30' comprising the abnormal electrode portion detected through the second inspection part V2 from the plurality of cells 30 after passing through the cell cutting part 270. Here, the discharge part 280 may grip the defective cell 30' comprising the abnormal electrode portion through a jig to separate the defective cell 30' from the cells 30 comprising the normal electrode portion.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the scope of the present invention.

Furthermore, the scope of protection of the present invention will be clarified by the appended claims.

### [Description of the Symbols]

10: Electrode
11, 11', 11": Electrode tab
20: Separator
30: Cell
100, 200: Apparatus for manufacturing secondary battery
110: Electrode supply part
111: Electrode supply roll
120: Main control system
130: Notching part
131: Laser
140: Electrode winding part
141: Electrode winding roll
250: Separator supply roll
260: Lamination part
270: Cell cutting part
280: Discharge part
B: Laser light
C1, C2: Conveyor belt
R: Roller
V1: First inspection part
V2: Second inspection part

## Claims

1. A method for manufacturing a secondary battery, the method comprising:
an electrode supply process of supplying an electrode (10) through an electrode supply part (110);
a first inspection process of detecting the supplied electrode (10) to distinguish a normal electrode portion and an abnormal electrode portion through a first inspection part (V1); and
a notching process of notching the electrode (10), which is subjected to the first inspection process, in a notching part (130),
wherein the notching process perform the notching through a laser so that the normal electrode portion and the abnormal electrode portion, which are detected in the first inspection process, are divided from each other;
wherein, in the first inspection process, the first inspection part (V1) divides the normal electrode portion from the abnormal electrode portion through a vision sensor to transmit a notching signal to the notching part (130) through a main control system (120);
wherein, in the notching process, the notching part (130) notches the normal electrode portion and the abnormal electrode portion, which are distinguished from each other in the first inspection part (V1), in different shapes based on the received notching signal.

2. The method of claim 1, wherein, in the notching process, the normal electrode portion is notched to form an electrode tab (11), and
the abnormal electrode portion is notched in the form of at least one of a marked shape, a shape having a hole, or a shape of a cut electrode tab (11').

3. The method of claim 1, wherein, in the electrode supply process, a supply rate of the electrode (10) is adjusted according to a speed of the notching performed in the notching process.

4. The method of claim 3, wherein, in the electrode supply process, the electrode supply part (110) comprises rollers (R) that supply the electrode (10),
wherein each of the rollers (R) is adjusted in rotation speed to adjust the supply rate of the electrode (10).

5. The method of claim 1, further comprising a winding process of winding the electrode (10), which is subjected to the notching process, around an electrode winding part (140).

6. The method of claim 1, further comprising, after the notching process:
a lamination process of alternately stacking the electrode (10) and a separator (20) to laminate the electrode (10) and the separator (20);
a second inspection process of detecting an electrode portion notched as the abnormal electrode portion through a second inspection part after the lamination process;
a cell cutting process of cutting a stack (S) of the electrode (10) and the separator (20), which are laminated, into a plurality of cells (30) after the second inspection process; and
a discharge process of discharging a defective cell (30') comprising the abnormal electrode portion, which is detected through the second inspection process, from the plurality of cells (30) through a discharge part (280) after the cutting process.

7. An apparatus for manufacturing a secondary battery, the apparatus comprising:
an electrode supply part (110) configured to supply an electrode (10);
a first inspection part (V1) configured to detect the supplied electrode (10) so as to distinguish a normal electrode portion and an abnormal electrode portion from each other; and
a notching part (130) configured to notch the electrode (10) passing through the first inspection part (V1),
wherein the notching part (130) notches the electrode (10) through a laser so that the normal electrode portion and the abnormal electrode portion, which are detected in the first inspection part (V1), are divided from each other;
wherein the first inspection part (V1) divides the normal electrode portion and the abnormal electrode portion from each other through a vision sensor to transmit a notching signal and the apparatus further comprises a main control system (120) configured to receive the notching signal so as to be transmitted to the notching part (130);
wherein the notching part (130) notches the normal electrode portion and the abnormal electrode portion, which are distinguished from each other in the first inspection part (V1), in different shapes based on the received notching signal.

8. The apparatus of claim 7, wherein the normal electrode portion is notched to form an electrode tab (11), and
the abnormal electrode portion is notched in the form of at least one of a marked shape, a shape having a hole, or a shape of a cut electrode tab (11').

9. The apparatus of claim 7, wherein the electrode supply part (110) is configured to adjust a supply rate of the electrode (10) according to a speed of the notching performed in the notching part (130).

10. The apparatus of claim 9, wherein the electrode supply part (110) comprises rollers (R) that supply the electrode (10),
wherein each of the rollers (R) is adjusted in rotation speed to adjust the supply rate of the electrode (10).

11. The apparatus of claim 7, further comprising:
a lamination part (260) configured to alternately stack the electrode (10) and a separator (20) to be laminated;
a second inspection part (V2) configured to detect an electrode portion notched as the abnormal electrode portion passing through the lamination part 260);
a cell cutting part (270) configured to cut a stack (S) of the electrode (10) and the separator (20), which are laminated, into a plurality of cells (30)after passing through the second inspection part (V2); and
a discharge part (280) configured to discharge a defective cell (30') comprising the abnormal electrode portion, which is detected through the second inspection part (V2), from the plurality of cells (30) after passing through the cutting part (270).

## Patentansprüche

1. Verfahren zum Herstellen einer Sekundärbatterie, das Verfahren umfassend:
einen Elektroden-Zufuhrprozess eines Zuführens einer Elektrode (10) durch einen Elektroden-Zufuhrteil (110);
einen ersten Inspektionsprozess eines Detektierens der zugeführten Elektrode (10), um einen normalen Elektrodenabschnitt und einen anormalen Elektrodenabschnitt zu unterscheiden, durch einen ersten Inspektionsteil (V1); und
einen Kerbprozess eines Kerbens der Elektrode (10), welche dem ersten Inspektionsprozess unterzogen wird, in einem Kerbteil (130),
wobei der Kerbprozess das Kerben durch einen Laser durchführt, so dass der normale Elektrodenabschnitt und der anormale Elektrodenabschnitt, welche in dem ersten Inspektionsprozess detektiert werden, voneinander getrennt werden;
wobei in dem ersten Inspektionsprozess der erste Inspektionsteil (V1) den normalen Elektrodenabschnitt von dem anormalen Elektrodenabschnitt durch einen Visionssensor abtrennt, um ein Kerbsignal zu dem Kerbteil (130) durch ein Haupt-Steuersystem (120) zu übertragen;
wobei in dem Kerbprozess der Kerbteil (130) den normalen Elektrodenabschnitt und den anormalen Elektrodenabschnitt, welche voneinander in dem ersten Inspektionsteil (V1) unterschieden werden, in unterschiedlichen Formen auf Grundlage des empfangenen Kerbsignals kerbt.

2. Verfahren nach Anspruch 1, wobei in dem Kerbprozess der normale Elektrodenabschnitt gekerbt wird, um einen Elektrodenstreifen (11) zu bilden, und der anormale Elektrodenabschnitt in der Form von wenigstens einem aus einer markierten Form, einer Form mit einem Loch oder einer Form eines geschnittenen Elektrodenstreifens (11') gekerbt wird.

3. Verfahren nach Anspruch 1, wobei in dem Elektroden-Zufuhrprozess eine Zufuhrrate der Elektrode (10) gemäß einer Geschwindigkeit des Kerbens angepasst wird, welches in dem Kerbprozess durchgeführt wird.

4. Verfahren nach Anspruch 3, wobei in dem Elektroden-Zufuhrprozess der Elektroden-Zufuhrteil (110) Rollen (R) umfasst, welche die Elektrode (10) zuführen, wobei jede der Rollen (R) in einer Rotationsgeschwindigkeit angepasst wird, um die Zufuhrrate der Elektrode (10) anzupassen.

5. Verfahren nach Anspruch 1, ferner umfassend einen Wicklungsprozess eines Wickelns der Elektrode (10), welche dem Kerbprozess unterzogen wird, um einen Elektroden-Wicklungsteil (140).

6. Verfahren nach Anspruch 1, ferner umfassend nach dem Kerbprozess:
einen Laminierungsprozess eines abwechselnden Stapelns der Elektrode (10) und eines Separators (20), um die Elektrode (10) und den Separator (20) zu laminieren;
einen zweiten Inspektionsprozess eines Detektierens eines Elektrodenabschnitts, welcher als der anormale Elektrodenabschnitt gekerbt wird, durch einen zweiten Inspektionsteil nach dem Laminierungsprozess;
einen Zellen-Schneidprozess eines Schneidens eines Stapels (S) der Elektrode (10) und des Separators (20), welche laminiert werden, in eine Mehrzahl von Zellen (30) nach dem zweiten Inspektionsprozess; und
einen Abgabeprozess eines Abgebens einer defekten Zelle (30'), welche den anormalen Elektrodenabschnitt umfasst, welcher durch den zweiten Inspektionsprozess detektiert wird, aus der Mehrzahl von Zellen (30) durch einen Abgabeteil (280) nach dem Schneidprozess.

7. Vorrichtung zum Herstellen einer Sekundärbatterie, die Vorrichtung umfassend:
einen Elektroden-Zufuhrteil (110), welcher dazu eingerichtet ist, eine Elektrode (10) zuzuführen;
einen ersten Inspektionsteil (V1), welcher dazu eingerichtet ist, die zugeführte Elektrode (10) zu detektieren, um so einen normalen Elektrodenabschnitt und einen anormalen Elektrodenabschnitt voneinander zu unterscheiden; und
einen Kerbteil (130), welcher dazu eingerichtet ist, die Elektrode (10) zu kerben, welche durch den ersten Inspektionsteil (V1) hindurchtritt,
wobei der Kerbteil (130) die Elektrode (10) durch einen Laser kerbt, so dass der normale Elektrodenabschnitt und der anormale Elektrodenabschnitt, welche in dem ersten Inspektionsteil (V1) detektiert werden, voneinander getrennt werden;
wobei der erste Inspektionsteil (V1) den normalen Elektrodenabschnitt und den anormalen Elektrodenabschnitt voneinander durch einen Visionssensor trennt, um ein Kerbsignal zu übertragen, und die Vorrichtung ferner ein Haupt-Steuersystem (120) umfasst, welches dazu eingerichtet ist, das Kerbsignal zu empfangen, welches zu dem Kerbteil (130) so zu übertragen ist;
wobei der Kerbteil (130) den normalen Elektrodenabschnitt und den anormalen Elektrodenabschnitt, welche voneinander in dem ersten Inspektionsteil (V1) unterschieden werden, in unterschiedliche Formen auf Grundlage des empfangenen Kerbsignals kerbt.

8. Vorrichtung nach Anspruch 7, wobei der normale Elektrodenabschnitt gekerbt wird, um einen Elektrodenstreifen (11) zu bilden, und
der anormale Elektrodenabschnitt in der Form von wenigstens einem aus einer markierten Form, einer Form mit einem Loch oder einer Form eines geschnittenen Elektrodenstreifens (11') gekerbt wird.

9. Vorrichtung nach Anspruch 7, wobei der Elektroden-Zufuhrteil (110) dazu eingerichtet ist, eine Zufuhrrate der Elektrode (10) gemäß einer Geschwindigkeit des Kerbens anzupassen, welches in dem Kerbteil (130) durchgeführt wird.

10. Vorrichtung nach Anspruch 9, wobei der Elektroden-Zufuhrteil (110) Rollen (R) umfasst, welche die Elektrode (10) zuführen,
wobei jede der Rollen (R) in einer Rotationsgeschwindigkeit angepasst wird, um die Zufuhrrate der Elektrode (10) anzupassen.

11. Vorrichtung nach Anspruch 7, ferner umfassend:
einen Laminierungsteil (260), welcher dazu eingerichtet ist, abwechselnd die Elektrode (10) und einen Separator (20) zu stapeln, welche zu laminieren sind;
einen zweiten Inspektionsteil (V2), welcher dazu eingerichtet ist, einen Elektrodenabschnitt zu detektieren, welcher als der anormale Elektrodenabschnitt gekerbt wird, welcher durch den Laminierungsteil (260) hindurchtritt;
einen Zellen-Schneidteil (270), welcher dazu eingerichtet ist, einen Stapel (S) der Elektrode (10) und des Separators (20), welche laminiert werden, in eine Mehrzahl von Zellen (30) zu schneiden, nachdem sie durch den zweiten Inspektionsteil (V2) hindurchtreten; und
einen Abgabeteil (280), welcher dazu eingerichtet ist, eine defekte Zelle (30') abzugeben, welche den anormalen Elektrodenabschnitt umfasst, welcher durch den zweiten Inspektionsteil (V2) detektiert wird, aus der Mehrzahl von Zellen (30), nachdem sie durch den Schneidteil (270) hindurchtritt.

## Revendications

1. Procédé de fabrication d'une batterie secondaire, le procédé comprenant :
un processus d'alimentation en électrode consistant à fournir une électrode (10) à travers une partie d'alimentation en électrode (110) ;
un premier processus d'inspection consistant à détecter l'électrode (10) fournie pour distinguer une partie d'électrode normale et une partie d'électrode anormale à travers une première partie d'inspection (V1) ; et
un processus d'encochage consistant à encocher l'électrode (10), qui est soumise au premier processus d'inspection, dans une partie d'encochage (130),
dans lequel le processus d'encochage réalise l'encochage par le biais d'un laser de sorte que la partie d'électrode normale et la partie d'électrode anormale, qui sont détectées dans le premier processus d'inspection, soient séparées l'une de l'autre ;
dans lequel, dans le premier processus d'inspection, la première partie d'inspection (V1) sépare la partie d'électrode normale de la partie d'électrode anormale par le biais d'un capteur de vision pour transmettre un signal d'encochage à la partie d'encochage (130) par le biais d'un système de commande principal (120) ;
dans lequel, dans le processus d'encochage, la partie d'encochage (130) encoche la partie d'électrode normale et la partie d'électrode anormale, qui sont distinguées l'une de l'autre dans la première partie d'inspection (V1), sous différentes formes sur la base du signal d'encochage reçu.

2. Procédé selon la revendication 1, dans lequel, dans le processus d'encochage, la partie d'électrode normale est encochée pour former une patte d'électrode (11), et
la partie d'électrode anormale est encochée sous la forme d'au moins une parmi une forme marquée, une forme ayant un trou ou une forme d'une patte d'électrode découpée (11').

3. Procédé selon la revendication 1, dans lequel, dans le processus d'alimentation en électrode, une vitesse d'alimentation en électrode (10) est ajustée selon une vitesse de l'encochage réalisé dans le processus d'encochage.

4. Procédé selon la revendication 3, dans lequel, dans le processus d'alimentation en électrode, la partie d'alimentation en électrode (110) comprend des rouleaux (R) qui fournissent l'électrode (10),
dans lequel la vitesse de rotation de chacun des rouleaux (R) est ajustée pour ajuster la vitesse d'alimentation en électrode (10).

5. Procédé selon la revendication 1, comprenant en outre un processus d'enroulement de l'électrode (10), qui est soumise au processus d'encochage, autour d'une partie d'enroulement d'électrode (140).

6. Procédé selon la revendication 1, comprenant en outre, après le processus d'encochage :
un processus de stratification consistant à empiler en alternance l'électrode (10) et un séparateur (20) pour stratifier l'électrode (10) et le séparateur (20) ;
un deuxième processus d'inspection consistant à détecter une partie d'électrode encochée comme étant la partie d'électrode anormale à travers une deuxième partie d'inspection après le processus de stratification ;
un processus de découpe de cellules consistant à découper un empilement (S) de l'électrode (10) et du séparateur (20), qui sont stratifiés, en une pluralité de cellules (30) après le deuxième processus d'inspection ; et
un processus de décharge consistant à décharger une cellule défecteuse (30') comprenant la partie d'électrode anormale, qui est détectée par le biais du deuxième processus d'inspection, parmi la pluralité de cellules (30) à travers une partie de décharge (280) après le processus de découpe.

7. Appareil de fabrication d'une batterie secondaire, l'appareil comprenant :
une partie d'alimentation en électrode (110) configurée pour fournir une électrode (10) ;
une première partie d'inspection (V1) configurée pour détecter l'électrode (10) fournie de façon à distinguer une partie d'électrode normale et une partie d'électrode anormale l'une de l'autre ; et
une partie d'encochage (130) configurée pour encocher l'électrode (10) passant à travers la première partie d'inspection (V1),
dans lequel la partie d'encochage (130) encoche l'électrode (10) par le biais d'un laser de sorte que la partie d'électrode normale et la partie d'électrode anormale, qui sont détectées dans la première partie d'inspection (V1), soient séparées l'une de l'autre ;
dans lequel la première partie d'inspection (V1) sépare la partie d'électrode normale et la partie d'électrode anormale l'une de l'autre par le biais d'un capteur de vision pour transmettre un signal d'encochage et l'appareil comprend en outre un système de commande principal (120) configuré pour recevoir le signal d'encochage de façon à ce qu'il soit transmis à la partie d'encochage (130) ;
dans lequel la partie d'encochage (130) encoche la partie d'électrode normale et la partie d'électrode anormale, qui sont distinguées l'une de l'autre dans la première partie d'inspection (V1), sous différentes formes sur la base du signal d'encochage reçu.

8. Appareil selon la revendication 7, dans lequel la partie d'électrode normale est encochée pour former une patte d'électrode (11), et
la partie d'électrode anormale est encochée sous la forme d'au moins une parmi une forme marquée, une forme ayant un trou ou une forme d'une patte d'électrode découpée (11').

9. Appareil selon la revendication 7, dans lequel la partie d'alimentation en électrode (110) est configurée pour ajuster une vitesse d'alimentation en électrode (10) selon une vitesse de l'encochage réalisé dans la partie d'encochage (130).

10. Appareil selon la revendication 9, dans lequel la partie d'alimentation en électrode (110) comprend des rouleaux (R) qui fournissent l'électrode (10),
dans lequel la vitesse de rotation de chacun des rouleaux (R) est ajustée pour ajuster la vitesse d'alimentation en électrode (10).

11. Appareil selon la revendication 7, comprenant en outre :
une partie de stratification (260) configurée pour empiler en alternance l'électrode (10) et un séparateur (20) à stratifier ;
une deuxième partie d'inspection (V2) configurée pour détecter une partie d'électrode encochée comme étant la partie d'électrode anormale passant à travers la partie de stratification (260) ;
une partie de découpe de cellules (270) configurée pour découper un empilement (S) de l'électrode (10) et du séparateur (20), qui sont stratifiés, en une pluralité de cellules (30) après leur passage à travers la deuxième partie d'inspection (V2) ; et
une partie de décharge (280) configurée pour décharger une cellule défecteuse (30') comprenant la partie d'électrode anormale, qui est détectée à travers la deuxième partie d'inspection (V2), parmi la pluralité de cellules (30) après son passage à travers la partie de découpe (270).
